# EUROPEAN PATENT APPLICATION

(11) **EP 4 825 946 A1**
(43) Date of publication of application: **21.10.2026**
(21) Application number: 25170738.6
(22) Date of filing: 15.04.2025
(51) Int. Cl.: C10G 1/00, C10G 1/08, C10G 1/10

(54) **METHOD OF PRODUCING RAW OIL FROM HYDROCARBONACEOUS RESIDUES AND PLANT THEREFOR**

(71) Applicant: Swestep AB, 592 41 Vadstena (SE)
(72) Inventor: KOLLERT, Peter, 216 12 LIMHAMN (SE); MATTSSON, Karl-Magnus, 592 41 VADSTENA (SE)
(74) Representative: Öberg & Sjöberg AB

(57) **Abstract**

A method of producing raw oil from hydrocarbonaceous residues comprising the steps: i. comminuting and mixing hydrocarbonaceous residues with oil having a boiling point of at least 300°C and a catalyst comprising aluminum silicate in a reactor vessel to form a mixture, wherein the comminuting and mixing is configured to provide sufficient friction heat, combined with any exothermal heat generated in the mixture, such that the temperature of the mixture reaches and is maintained at 240°C to 290°C, wherein the reactor vessel is maintained at subatmospheric pressure being at least 0.05 bar below atmospheric pressure, and ii. obtaining, from the reactor vessel, gaseous CO₂ and gaseous hydrocarbons formed by chemical reactions in the mixture, as well as removing gaseous H₂O evaporated from the mixture, and iii. producing the raw oil from the gaseous hydrocarbons. A plant, as well as raw oil produced by the method or plant, are also provided.

## Description

### TECHNICAL FIELD

The present invention relates to a method of producing oil from hydrocarbonaceous residues and a plant therefor.

### BACKGROUND

Fossil raw oil has many uses in the petroleum and petrochemical industries. Fossil raw oil, being a finite resource, however poses many problems including the emission of greenhouse gases such as carbon dioxide (CO₂). Additionally, many products produced from fossil raw oil, as well as products produced from other sources, eventually end up as waste requiring disposal.

Accordingly, there is a need for solutions not only to fossil raw oil and the fossil fuels and products produced therefrom, but also a need for solutions to how to handle waste in a way which allows waste to be repurposed.

Accordingly, there is a need for methods and plants for producing raw oil, or synthetic raw oil, from hydrocarbonaceous residues such as various types of waste.

Catalytic production of diesel from hydrocarbonaceous residues is known from the German patent DE 10 2005 056 736. Despite the advances made in the field there is a need for further solutions.

### SUMMARY

At least one of the abovementioned needs or at least one of the further needs which will become evident from the below description, are according to corresponding first and second aspects of the present invention obtained by a method of producing raw oil from hydrocarbonaceous residues comprising the steps of:
i. comminuting and mixing hydrocarbonaceous residues with an oil having a boiling point of at least 300°C and a catalyst comprising aluminum silicate in a reactor vessel to form a mixture,
   a. wherein the comminuting and mixing is configured to provide sufficient friction heat, combined with any exothermal heat generated in the mixture, such that the temperature of the mixture reaches and is maintained at 240°C to 290°C, preferably 260° to 290°, more preferably 260°C to 280°C,
   b. wherein the reactor vessel is maintained at a subatmospheric pressure being at least 0.05 bar below atmospheric pressure, and
ii. collecting, from the reactor vessel, gaseous CO₂ and gaseous hydrocarbons formed by chemical reactions in the mixture, as well as collecting gaseous H₂O evaporated from the mixture, and
iii. producing the raw oil from the gaseous hydrocarbons,
   and
   a plant for producing raw oil from hydrocarbonaceous residues, comprising:
   - a reactor vessel for holding a mixture of hydrocarbonaceous residues, oil having a boiling point of at least 300°C, and a catalyst comprising aluminum silicate,
   - a comminuting and mixing device for comminuting and mixing the hydrocarbonaceous residues with the oil and the catalyst in the reactor vessel, the comminuting and mixing device being configured to provide sufficient friction heat, combined with any exothermal heat generated in the mixture, such that the temperature of the mixture reaches and is maintained 240°C to 290°C, preferably 260° to 290°, more preferably 260°C to 280°C,
   - a pump system configured to maintain the reactor vessel at a subatmospheric pressure being at least 0.05 bar below atmospheric pressure, and for removing gaseous CO₂ formed by a chemical reaction in the mixture from the reactor,
   - a device for collecting, from the reactor vessel, gaseous hydrocarbons formed by a chemical reaction in the mixture, as well as collecting gaseous H₂O evaporated from the mixture, and,
   - a device for producing raw oil from the gaseous hydrocarbons.

The present invention is thus based on the discovery, by the present inventors, that the combination of the catalyst, the subatmospheric pressure, and the given temperature range provides for efficiently converting hydrocarbonaceous residues into a raw oil, e.g. a synthetic raw oil, that can replace fossil raw oil in the petroleum and petrochemical industry. In particular the method utilizes moderate temperatures and pressures compared to other methods. Further, in contrast to other conversion technologies, such as physiochemical conversion, biochemical conversion, and thermochemical conversion, the method according to the first aspect of the present invention provides a broad range of usable hydrocarbonaceous residues, or feedstock, is efficient and cost-effective, inter alia due to lower temperatures than thermochemical conversion.

Further, the method generally does not produce dioxin, furan, coke, or any cancerogenic substances.

The method of producing raw oil may alternatively be considered a method of producing synthetic raw oil.

Generally, the raw oil can replace fossil raw oil in petroleum and petrochemical industry. In particular, the raw oil, and fuels such as diesel fuel produced therefrom, may replace fossil oil, and fossil fuels, in internal combustion engines, including gas turbines, and in particular compression ignited engines such as diesel engines.

The hydrocarbonaceous residues may alternatively be referred to as any of hydrocarbon-based waste and residues, residues containing hydrocarbons, or matter containing hydrocarbons. The hydrocarbonaceous residues may comprise any of paper and pulp waste, textile waste, biomass such as lignocellulosic material, e.g. forest waste, wood, straw, reed, lignin, fish offal, food waste, food industrial waste, agricultural waste, agricultural residues, household waste such as municipal solid waste (msw), discarded rubber products such as used tires, waste oils, slaughter waste, and plastic waste. Other types of hydrocarbonaceous residues include refuse-derived fuel (rdf)

Preferably the method comprises further steps performed before step (iii) for optimizing or adapting the hydrocarbonaceous residues that enter the reactor vessel. This may be referred to as front end processing.

Accordingly, the hydrocarbonaceous residues preferably enter the reactor vessel comminuted to a size depending on the type of residues. Biomass is preferably comminuted to individual pieces at the most 15x5x5 mm. Plastics are preferably comminuted to individual pieces at the most 5x5x5 mm or 10x1x1 mm. Before entering the reactor vessel, the hydrocarbonaceous residues may however be much larger, such as preferably up to 150 mm in maximum dimension. Accordingly, the method may comprise a further step, prior to step (i) of comminuting hydrocarbonaceous residues to dimensions of 15x5x5 mm or less. The plant may thus comprise a mill or shredder to comminute the hydrocarbonaceous residues to these dimensions.

Additionally, the method may comprise a step of separating ferrous and non-ferrous contaminants, or inert material, from the hydrocarbonaceous residues. The plant may thus comprise a magnetic separator and an air separator, such as a weight separator wind sieve or vortex separator, to remove such contaminants. Such separation is preferably performed before comminuting the hydrocarbonaceous residues to obtain the above listed dimensions.

The steps are preferably performed simultaneously. Accordingly, the method is preferably a continuous method for continuously producing the raw oil.

Step (i) comprises comminuting and mixing hydrocarbonaceous residues with an oil having a boiling point of at least 300°C and a catalyst comprising aluminum silicate in a reactor vessel to form a mixture.

Comminuting comprises grinding or milling, or otherwise decreasing the size of individual pieces of the hydrocarbonaceous residues. Mixing comprises mixing the hydrocarbonaceous residues with the oil and the catalyst, as well as further mixing the mixture formed by the mixing.

The oil may be any type of oil having a boiling point of at least 300°C. Accordingly, the major part of the oil is not evaporated from the reactor vessel at the given temperatures and pressures. The oil serves as a carrier for the catalyst. The oil may for example be a lubricant oil, or a motor oil. The oil may have a carbon number of C18 or more.

The catalyst comprises aluminum silicate. The catalyst is preferably provided as a powder. Typically, the catalyst is used in a mixture ratio of 5 to 15 % of the volume of hydrocarbonaceous residues. The consumption of catalyst is typically below 0.1% of volume of hydrocarbonaceous residues.

The reactor vessel is preferably insulated to assist in maintaining the desired temperature range. The reactor vessel is preferably formed circularly or annularly so that the mixture may be transported along the periphery of the reactor vessel to make the mixing more efficient.

During step (i) of comminuting the hydrocarbonaceous residues with the oil and the catalyst the mixture is formed or maintained and its temperature increases or is maintained at the indicated temperature range due to the friction heat from the comminuting and mixing as well as reaction heat from the chemical reactions in the mixture. At the indicated temperature range H₂O, i.e. water, in the mixture will evaporate from the mixture and fill an upper part of the reactor vessel. The pressure in the reactor vessel is further maintained at a sub atmospheric pressure, e.g. by removing gas from the reactor vessel, whereby CO₂, i.e. carbon dioxide, formed by chemical reactions in the mixture is removed from the reactor vessel. In particular, the subatmospheric pressure and the temperature in the reactor vessel maintains an exothermic reaction associated with the extraction of O₂, i.e. oxygen, as CO₂.

Continuously, the catalyst is adsorbed on the hydrocarbonaceous residues for driving a catalytic reaction and an exothermic reaction whereby long chain hydrocarbons, or heavy hydrocarbons, are formed. Further, halogens and sulfur in the hydrocarbonaceous residues may react with calcium to form salts. Continuing with the catalytic reaction, the long chain hydrocarbons undergo molecular shortening to unsaturated hydrocarbons corresponding to middle length distillates. Expressed differently, the long chain hydrocarbons are cut into shorter unsaturated hydrocarbons. In order to hydrogenate these unsaturated hydrocarbons, hydrogen, and in the case of the hydrocarbonaceous residues comprising at least 30 wt% biomass as further discussed below, atomic hydrogen, hydrogenate the unsaturated hydrocarbons. Here the catalyst also separates from the hydrocarbons so as to catalyze the reaction of new hydrocarbonaceous residues entering the reactor vessel. Accordingly, the result of step (i) is the production of CO₂, H₂O, and hydrocarbons in reactor vessel.

The comminuting and mixing is configured to provide sufficient friction heat, combined with any exothermal heat generated in the mixture, such that the temperature of the mixture reaches and is maintained at 240°C to 290°C, preferably 260° to 290°, more preferably 260°C to 280°C,

Expressed differently, the heat needed for the reactions in the reactor vessel is derived from any exothermal heat generated in the mixture and the friction heat from the comminuting and mixing. Accordingly, it is preferred that no other heat, such as heating of the walls of the reactor vessel or heating of the mixture in the reactor vessel, e.g. by steam, is performed.

The reactor vessel is maintained at a subatmospheric pressure being at least 0.05 bar below atmospheric pressure. Expressed differently, the pressure within the reactor vessel should be at least 0.05 bar below the pressure outside the reactor vessel.

The comminuting and mixing device preferably comprises a mixing turbine having an impeller or mill wheel that is driven to rotate and comminute the hydrocarbonaceous residues and to mix them with the oil and the other components of the mixture. The comminuting and mixing device preferably withdraws the mixture from the reactor vessel, comminutes and mixes it further, and then injects the mixture back into the reactor vessel. As noted above, the result of step (i) is the production of CO₂, H₂O, and hydrocarbons in reactor vessel. At the temperature range indicated, a major part of the produced saturated hydrocarbons are gaseous which provides their separation from the mixture.

Accordingly, step (ii) comprises collecting, from the reactor vessel, gaseous CO₂ and gaseous hydrocarbons formed by chemical reactions in the mixture, as well as collecting gaseous H₂O evaporated from the mixture.

The gaseous H₂O and gaseous hydrocarbons are preferably collected separately from the CO₂, since the CO₂ will generally be collected when lowering and maintaining the reactor vessel at the subatmospheric pressure. It is however contemplated that a minor part of the CO₂ may be collected together with gaseous H₂O and gaseous hydrocarbons. Collecting here preferably refers to leading the respective gaseous H₂O, gaseous hydrocarbons, and gaseous CO₂ out of the reactor vessel.

The pump system configured to maintain the reactor vessel at a subatmospheric pressure is thus preferably used also to collect the gaseous CO₂. The pump system thus preferably comprises a vacuum pump and a pressure sensor, the pressure sensor being configured to measure the pressure in the reactor vessel and to provide signals for operating the vacuum pump to remove gas, primarily CO₂, for the reactor vessel to provide the desired subatmospheric pressure.

The device for collecting, from the reactor vessel, gaseous hydrocarbons formed by a chemical reaction in the mixture, as well as collecting gaseous H₂O evaporated from the mixture may comprise one or more of an outlet and a distillation column formed integrally with, or attached to, the reactor vessel. Specifically, the device, e.g. the outlet or distillation column, is preferably provided in an upper part of the reactor vessel so that the gaseous hydrocarbons and gaseous H₂O spontaneously reaches the device.

Step (iii) comprises producing the raw oil from the gaseous hydrocarbons. Producing herein refers to at least condensing the gaseous hydrocarbons into liquid form. Preferably, as further discussed below, the raw oil is produced by condensing the gaseous H₂O and gaseous hydrocarbons and separating the formed liquid hydrocarbons from the formed liquid H₂O.

The device for producing raw oil from the gaseous hydrocarbons may comprise any device capable of isolating the gaseous hydrocarbons. Typically, the device may comprise a condenser to condense the gaseous hydrocarbons, and any gaseous H₂O entrained or mixed with the gaseous hydrocarbons. This typically forms a liquid which may then be separated, e.g. by flotation in a separation tank whereby the hydrocarbons form a layer floating on the liquid H₂O.

Typical plant sizes may produce 500 l, 1000 | or 5000 | raw oil per hour. However, there is no limitation, and larger plants will produce higher amounts of raw oil per hour.

Generally, time elapsed from the hydrocarbonaceous residues enter the method and plant to the corresponding raw oil has been produced may be 6 minutes or less.

The yield of the method may reach 1 liter oil and 1 liter methanol from 3 kg of hydrocarbonaceous residues. More particularly, table 1 below shows the products produced from 1 ton of hydrocarbonaceous residues in the form of biomass using a plant producing 1000 | raw oil per hour. Generally, 85% of the heat value of the hydrocarbonaceous residues is retained in the produced products.

**Table 1.**

| Product | From 1 ton of biomass [kg] | Amount produced per hour |
|---|---|---|
| Diesel (produced from the raw oil) | 310 | 850 kg = 1000 \| |
| CO₂ | 430 | 1180 kg |
| H₂O | 220 | 601 kg = 603 \| |
| Fertilizer | 15 | 51 kg |
| Ash and other inorganic substances | 25 | 69 kg |

When the hydrocarbonaceous residues consists of municipal solid waste (msw), the conversion rate is 2.1-2.5 kg msw to 1 liter diesel.

When the hydrocarbonaceous residues consists of plastic, the conversion rate is 1.5 kg plastic to 1 liter diesel.

The CO₂ can be released to the atmosphere, stored, including as liquified gas. Preferably however the CO₂ is used to produce methanol as described further below.

The H₂O produced generally corresponds to wastewater and may be disposed of. Preferably however the H₂O is used to obtain H₂ for the production of methanol as described further below.

Preferably step (iii) comprises the substeps of:
a. condensing the gaseous hydrocarbons and the gaseous H₂O to form a condensed liquid comprising liquid hydrocarbons and liquid H₂O, and,
b. separating the liquid hydrocarbons from the condensed liquid to produce the raw oil.

Correspondingly, it is preferred that the device for producing raw oil from the gaseous hydrocarbons comprises:
∘ a condenser for condensing the gaseous hydrocarbons and the gaseous H₂O to form a condensed liquid comprising liquid hydrocarbons and liquid H₂O, and,
∘ a separator for separating the liquid hydrocarbons from the condensed liquid to produce the raw oil.

This is advantageous in that it allows a simple outlet to be used in the reactor vessel whereby both the gaseous hydrocarbons and the gaseous H₂O can be collected through the outlet. Additionally, condensing the gaseous hydrocarbons and the gaseous H₂O provides for recovering heat which can be reused in the method and in the plant.

The separator may comprise a tank in which the condensed liquid stratifies into liquid hydrocarbons floating on the liquid H₂O and can be thus separated. Alternatively, the separator may comprise a distillation column in which the condensed liquid is heated so that the liquid carbons, but no, or only minor amounts, of the H₂O evaporates.

Preferably step (i) further comprises adding CaCO₃ to the mixture.

Correspondingly the plant may further comprise a source of CaCO₃ and a conveyor device, such as a screw conveyor, for conveying CaCO₃ into the reactor vessel.

CaCO₃, such as limestone may be advantageously added to the mixture to counter halogens such as fluorine, chlorine, bromine, and iodine. Primarily the chlorine content is important to counter. Besides the halogens, also sulfur is preferable to counter. These elements are neutralized with the calcium in the CaCO₃.

The consumption of CaCO3 may be about 1 to 5%, preferably 2 to 3% of the volume of hydrocarbonaceous residues

Preferably the hydrocarbonaceous residues comprise at least 30 wt% biomass.

This is advantageous in that biomass releases atomic hydrogen in the reactor vessel which provides a more efficient hydrogenation and saturation of the unsaturated hydrocarbons formed in the mixture. In particular, biomass components such as cellulose and sugar, when in the reactor vessel, decompose to release atomic hydrogen, e.g. according to the following formulae:

1) Cellulose: C₆H₁₁O₅ = 2,5 CO₂ + (CH₂)ₙ (3,5) + H (4)

2) Sugar: C₆H₁₂O₆ = 3 CO₂ + (CH₂)ₙ (3) + H (6)

Preferably the hydrocarbonaceous residues, prior to comminuting and mixing, comprises at the most 5 wt% inorganic matter.

This is advantageous in that a low, i.e. 5 wt% or less, content of inorganic matter, increases the efficiency of the method and plant.

Preferably the hydrocarbonaceous residues have a dry matter content of at least 70%, preferably 80%, more preferably at least 85%.

This is advantageous in that it increases the efficiency of the method and plant. In particular, at these higher dry matter contents less H₂O is evaporated from the mixture.

Preferably the method further comprises the steps of:
iv. distilling the raw oil to at least produce light hydrocarbons and heavy hydrocarbons,
and wherein the method preferably comprises the further steps of:
v. recirculating the heavy hydrocarbons to the reactor vessel, and/or
vi. adding at least one additive to the light hydrocarbons.

Correspondingly it is preferred if the plant further comprises
- a distillation column for distilling the raw oil to at least produce light hydrocarbons and heavy hydrocarbons,
and wherein the plant preferably further comprises:
- a recirculating loop for recirculating the heavy hydrocarbons to the reactor vessel, and/or,
- a mixer for adding at least one additive to the light hydrocarbons.

This is advantageous in that it provides for producing products such as diesel.

The light hydrocarbons preferably constitute a diesel product, in particular an EN 590

Diesel or higher Diesel quality such as DieselMk1. Here, preferably further distillation and desulphurization may be required to fulfill the standard. Table 2 below shows properties of a sample of diesel obtained from raw oil produced using the method and in the plant after two distillation steps using distillation columns and a desulphurization step. Also shown are the requirements of the LST EN 590 (automotive diesel) and LST EN 14214 (biodiesel). As seen, the sample fulfills the requirement of the LST EN 590 diesel but not the LST EN 14214 biodiesel which shows that the diesel is more similar to conventional, fossil based, diesel than biodiesel. This shows that the diesel, and also the raw oil produced using the method, is more suitable for being treated in conventional petroleum and petrochemical industries without modifications to the processes and plants used than biodiesel.

**Table 2**

| Parameter | LST EN 590 | | LST EN 14214 | | Sample |
|---|---|---|---|---|---|
| | min | max | Min | max | |
| Density at 15°C [kg/m³] | 820 | 845 | 860 | 900 | 830 |
| Viscosity at 40°C [mm²/s | 2.00 | 4.50 | 3.5 | 5.0 | 2.2 |
| Acid value [mg KOH/g] | | | | 0.5 | 0.53 |
| Iodine value [g I₂ / 100 g] | | | | 120 | 19.2 |
| Sulphur content [mg/kg] | | 10 | | 10 | 98 |
| Water content [mg/kg] | | 200 | | 500 | 120 |
| Flashpoint [°C] | .55 | | 120 | | 61 |
| Ignition temperature [°C] | | | | | 64 |
| Pour point [°C] | | -22 | | | -24 |
| Cold filter plugging point [°C] | | -44 | | -44 | <-45 |

A Cetan additive may be required for EN 590 diesel production depending on feedstock mix. A maximum of 1% of fuel volume is expected.

The heavy hydrocarbons, which do not end up as diesel, are preferably recirculated to the reactor vessel as oil.

Preferably the method further comprises the steps of:
vii. removing part of the mixture from the reactor vessel,
viii. separating the removed part of the mixture into liquid hydrocarbons and inorganic substances and catalyst,
and more preferably also comprises the further steps of:
ix. recirculating the liquid hydrocarbons to the reactor vessel, and/or:
x. separating the inorganic substances and catalyst into minerals, ash and catalyst, and
xi. recirculating the catalyst to the reactor vessel.

Correspondingly, the plant preferably further comprises:
- an outlet for removing part of the mixture from the reactor vessel,
- a separator for separating the removed part of the mixture into liquid hydrocarbons and inorganic substances and catalyst,
and more preferably further comprises:
- a recirculation loop for recirculating the liquid hydrocarbons to the reactor vessel and/or:
   - a separator for separating the inorganic substances and catalyst into minerals, ash and catalyst, and,
   - a recirculation loop for recirculating the catalyst to the reactor vessel.

This is advantageous in that it allows for handling hydrocarbons that remain in liquid phase or solid phase at the temperature and pressure in the reactor vessel. While liquid hydrocarbons, i.e. the oil with which the hydrocarbonaceous residues are mixed with, should be present in the reactor vessel in order for the reactions to occur, the reactions may form heavier hydrocarbons that cannot leave the reactor vessel as gaseous hydrocarbons at the temperature and pressure resident within the reactor vessel. Additionally, the catalyst, and inorganic substances present within the hydrocarbonaceous residues, will eventually accumulate within the mixture.

Accordingly, the part of the mixture that is removed may comprise solid or liquid hydrocarbons, inorganic substances, ash, minerals, and the catalyst. By removing the part of the mixture and separating it into liquid hydrocarbons, inorganic substances and catalyst, the liquid hydrocarbons can be recirculated to replenish and/or supplement the oil with which the hydrocarbonaceous residues are mixed with. Further, the catalyst may be separated from inorganic substances and the ash and also recirculated to the reactor vessel.

The part of the mixture is preferably removed from a lower part of the reactor vessel. Generally, the mixture in the reactor vessel may stratified or layered so that the heavier, denser and/or less volatile, parts of the mixture are position in a lower layer with the lighter, less dense and/or more volatile, parts of the mixture in a higher layer.

The part of the mixture may be removed through an outlet. A conveyor, such as a screw conveyor, or a pump, may be used to remove the part of the mixture from the reactor vessel. Alternatively, the part of the mixture may flow spontaneously, by gravity, from out of the reactor vessel. It is further contemplated that the part of the mixture may be removed via the comminuting and mixing device.

Generally, the volume flow of the part of the mixture should be configured such that the volume of the mixture in the reactor vessel remains constant. In other words, the mass flow of hydrocarbonaceous residue, oil, and catalyst into the reactor vessel should match the mass flow of CO₂, H₂O, gaseous hydrocarbons, and the part of the mixture out of the reactor vessel.

The removed part may be separated into liquid hydrocarbons and inorganic substances and catalyst using for example a sieve. Preferably, the liquid hydrocarbons are separated by heat, e.g. distillation, whereby the part of the mixture that is removed is further heated, such as beyond the temperature in the reactor vessel, to form gaseous hydrocarbons that are then condensed to reform the liquid hydrocarbons which are recirculated to the reactor vessel. Here, a tank may be provided to store the liquid hydrocarbons prior to them being added as oil to the reactor vessel again.

Any hydrocarbons that cannot be separated from the part of the mixture removed from the reactor vessel in this way, such as tar and viscous bitumen, may be subjected to a grinding device, in particular a hammer mill. Here, the tar and viscous bitumen is grinded into oil vapor which can then be added to the liquid hydrocarbons and recirculated as described above. A subatmospheric pressure may be provided in the hammer mill to further aid the formation of the oil vapor.

The remains, after separating the liquid hydrocarbons and any oil vapor, contain inorganic substances, such as ash and minerals, and the catalyst. These are further separated to obtain catalyst, which preferably is recirculated to the reactor vessel, and mineral and ash. The separation may for example comprise flotation. Any residuals from the limestone, CaCO₃, added to the reactor vessel may also be recirculated. The ash is collected, minerals contained in the ash are separated and may be used for the production of fertilizers, the remaining ash then disposed of, for example as land filling material.

Any heavy metals in the ash, such as e.g. cadmium, lead, chromium and mercury, may be separated from the ash by electrolysis and recycled.

Remaining inorganic contents in the ash such as mineral salts, sand, can be disposed as non-hazardous waste and used for construction applications. Mineral salts in particular may be used as fertilizer.

The separator for separating the inorganic substances and catalyst into minerals, ash and catalyst may for example comprise a flotation tank wherein typically the heavier constituents sink and lighter constituents float.

The recirculation loop for recirculating the catalyst to the reactor vessel may comprise a tank for storing catalyst, and/or a conveyor for conveying the catalyst to the reactor vessel.

Preferably the method further comprises the step of:
xii. producing methanol by reacting CO₂ collected from the reactor vessel with hydrogen gas obtained from the H₂O collected from the reactor vessel.

Correspondingly the plant preferably further comprises:
- a further reaction vessel for producing methanol by reacting CO₂ collected from the reactor vessel with hydrogen gas obtained from the H₂O collected from the reactor vessel.

This is advantageous in that it allows for utilizing also the CO2 and H₂O produced when the method is carried out. The methanol may be used as fuel, e.g. for directly powering a combustion engine or for powering a fuel cell, or it may be used as a chemical, e.g. as a solvent or precursor to other common chemicals such as formaldehyde, acetic acid, and methyl tert-butyl ether. In that way the CO₂ and H₂O can be turned into a valuable product, methanol, instead of having to be collected and disposed of.

Methanol has the chemical formula CH₃OH.

The methanol is produced by reacting CO₂ with hydrogen, i.e. H₂. The reaction may be a one step process of hydrogenating the CO₂ with the H₂ over a catalyst such as a copper or copper/zinc oxide catalyst. The reaction may alternatively be a two-step process wherein CO₂ is reduced to CO and then reduced with H₂.

One example of obtaining H₂ from H₂O is by electrolysis, i.e. by passing an electric current through H₂O. The electricity required is preferably obtained from renewable sources, such as solar or wind. Another example of obtaining H₂ from H₂O is thermochemical water splitting in which high temperature heat (500°C-2000°C), obtained e.g. by concentrating sunlight, and a catalyst result in the production of H₂ via a cycle of two or more steps, such as the hybrid copper chloride cycle.

The further reaction vessel may be any suitable reaction vessel for producing the methanol.

A third aspect of present invention relates to raw oil produced by performing the method according to the first aspect of the present invention, or produced using the plant according to the second aspect of the present invention, wherein the raw oil preferably comprises or consists of hydrocarbons having carbon numbers in the range of C6-C26, and/or has a density of 820-850 kg/m³.

Thus, as noted, the raw oil preferably comprises or consists of hydrocarbons having carbon numbers in the range of C6-C26, and/or has a density of 820-850 kg/m³. More preferably the raw oil comprises or consists of hydrocarbons having carbon numbers in the range of C11-C21.

The raw oil can be used as an alternative to conventional, fossil-based raw oil, in the petroleum and petrochemical industry. In particular, the raw oil may be used in such industry, e.g. to produce fuels, lubricants, plastics, and other chemicals without requiring alterations to the conventional plants and facilities used to store, handle, distill, and convert raw oil to these products. This provides for replacing fossil raw oil with a raw oil formed from hydrocarbonaceous residues, e.g. waste, which results in lower CO₂ emission. It further provides for using locally produced waste to produce the raw oil which also leads to less CO₂ emissions due to less need to transport the raw oil long distances to petroleum and petrochemical industries

### BRIEF DESCRIPTION OF THE DRAWINGS

A more complete understanding of the abovementioned and other features and advantages of the present invention will be apparent from the following detailed description of preferred embodiments in conjunction with the appended drawings, wherein:
- Fig. 1: shows, schematically, a first embodiment of a plant according to the second aspect of the present invention used for carrying out the method according to the first aspect of the present invention.
- Fig. 2: shows, schematically, a reactor vessel for use in the plant and method shown in Fig. 1.

All the figures are schematic, not necessarily to scale, and generally only show parts which are necessary in order to elucidate the respective embodiments, whereas other parts may be omitted or merely suggested. Any reference number appearing in multiple drawings refers to the same object or feature throughout the drawings, unless otherwise indicated.

Letter suffixes of reference numbers indicate single individual objects or features among the objects and features having the same number.

### DETAILED DESCRIPTION

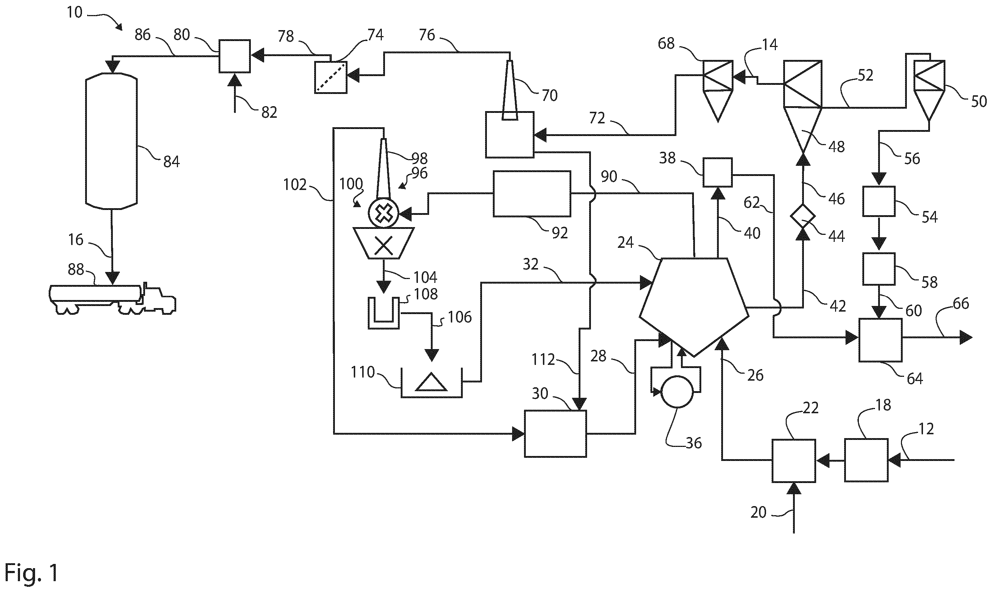

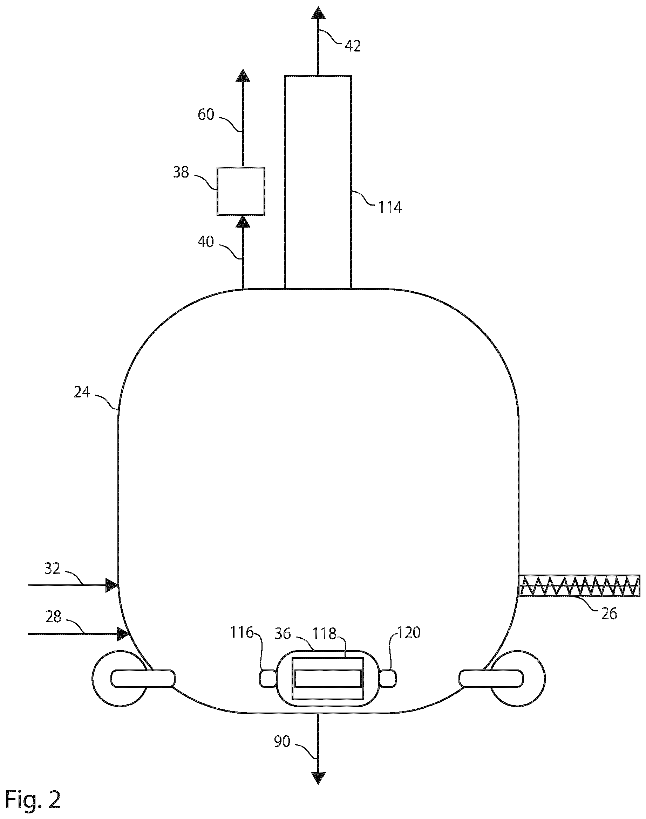

Fig. 1 shows, schematically, a first embodiment of a plant 10 according to the second aspect of the present invention used for carrying out the method according to the first aspect of the present invention. The plant 10 converts hydrocarbonaceous residues 12 such as municipal waste, waste plastic, etc., into a raw oil 14, which later is further processed to diesel 16. At the start of the process, the hydrocarbonaceous residues 12 are preferably as shown preprocessed in a mill 18. Here, inert materials may also be separated from the hydrocarbonaceous residues 12. Next, the hydrocarbonaceous residues 12, now comminuted to dimensions less than 15x5x5 mm is mixed with CaCO₃ 20 in a mixer 22, the amount of CaCO₃ being selected so as to prevent undesired formation of acids. The hydrocarbonaceous residues 12 and CaCO₃ 20 is then transported into a reactor vessel 24 via screw conveyor 26 (shown more detail in Fig. 2). At the same time oil 28 from oil tank 30 is introduced into the reactor vessel 24. An aluminium silicate catalyst 32 is also introduced into the reactor vessel 24. In the reactor vessel 24 the hydrocarbonaceous residues 12 are comminuted and mixed with the oil 28, the CaCO₃ 28, and the catalyst 32 to form a mixture using comminuting and mixing device 36 (shown in more detail in Fig. 2) which withdraw the mixture from the reactor vessel 24, further comminute and mix the hydrocarbonaceous residues 12 and the mixture and impart friction heat to it using an impeller or mill wheel, and return the mixture to the reactor vessel 24. At the same time, a pump system 38 provides a subatmospheric pressure in the reactor vessel 24 and removes CO₂ 40 formed from chemical reactions in the mixture from the reactor vessel 24. With the friction heat from the comminuting and mixing devices 36, and the subatmospheric pressure provided by pump system 38, the temperature in the reactor vessel 24 reached 240-290°C at which chemical reactions in the mixture removes O₂ in the form of CO₂ from the mixture such that gaseous hydrocarbons are formed and H₂O is evaporated. The H₂O and the gaseous hydrocarbons are led from the reactor vessel as shown by 42 and condensed in a condenser 44 to obtain a liquid comprising liquid hydrocarbons and liquid H2O. This liquid is led, as indicated by 46, to a separation tank 48 in which the liquid hydrocarbons rise to the top. From the storage tank 48 the H₂O may be led off to a storage tank 50 as indicated by 52. The water may then be purified in a filter 54 to which it is led as indicated by 56. Following the filter, the water may be led to an electrolyzer 58 for producing H₂ 60 for methanol production. Accordingly, CO₂ from the pump system 38 may be led, as indicated by 62, to a further reactor vessel 64 where it is used to produce methanol 66 using the H2 60.

At the same time, liquid hydrocarbons are led from the separation tank 48, thereby producing the raw oil 14. The raw oil 14 is collected in a storage tank 68. And is then ready for use as raw oil in petroleum or petrochemical industry.

Preferably, as shown, the raw oil 14 is further processed to a diesel. This is obtained by leading the raw oil 14 to a distiller column 70 as indicated by 72. In the distiller column 70 the raw oil is distilled to produce a diesel. The diesel is then led to a desulphurization system 74 as indicated by 76 to remove sulfur. The diesel is then led, as indicated by 78, to a mixing device 80 in which an additive 82, in particular a cetan additive, is added. The now finished diesel is led to a storage tank 84 as indicated by 86, from which it may be distributed by tank truck 88.

While most of the hydrocarbonaceous residues 12 is converted into raw oil 14 and diesel 16, a major part of the catalyst 28 and inorganic substances such as CaCO₃ will remain in the reactor vessel 24. Additionally, heavy hydrocarbons, which remain liquid or solid in the reactor vessel 24 will also remain in the reactor vessel 24. Accordingly, a part of the mixture is led, as indicated by 90, from the bottom of the reactor vessel 24, to a storage tank 92 from which the part of the mixture, as indicated by 94 is led to a device 96 for separating liquid hydrocarbons from the part of the mixture. The device 96 comprises an evaporation chamber 98 for heating and separating light hydrocarbons and heavy hydrocarbons from the mixture. The device 96 further comprises a hammer mill 100 for grinding the heavy carbons, such as tar and viscous bitumen, to release oil vapor which is added to the light hydrocarbons. The thus formed light hydrocarbons are then led, as indicated by 102, to the oil tank 30 for recirculation into the reactor vessel 24.

The remains after hammer mill 100 is inorganic substances, ash and catalyst. These are led from the hammer mill, as indicated by 104 and 106, via a temporary storage 108 to a separation 110, e.g. a flotation tank or centrifuge, in which the catalyst 32 is separated and recirculated to the reactor vessel 24.

In addition, heavy hydrocarbons formed in the distillation column 70 may be returned to the reactor vessel 24 via oil tank 30 as indicated by 112.

Fig. 2 shows, schematically, a reactor vessel 24 for use in the plant and method shown in Fig. 1. Reactor vessel 24 accordingly preferably is insulated to help maintain the desired temperature range therein. As seen, the reactor vessel 24 may comprise, or be directly connected to, a distillation column 114 at the top of the reactor vessel 24 to assist in collecting the gaseous hydrocarbons and gaseous H₂O and leading them from the reactor vessel as indicated by 42. It is also possible to allow the gaseous H₂O to condense in the distillation column 114 so that only the gaseous hydrocarbons are led from the reactor vessel as indicated by 42. Fig. 2 further shows in greater details the screw conveyor 26 for transporting the hydrocarbonaceous residues 12 into the reactor vessel 24 as well as the comminuting and mixing device 36, here three being shown, which withdraw the mixture from the reactor vessel 24 via pipe 115, further comminute and mix the hydrocarbonaceous residues 12 and the mixture and impart friction heat to it using an impeller or mill wheel 116 driven by a motor, not shown, and return the mixture to the reactor vessel 24 via pipe 120.

Also shown is the outlet 90 through which a part of the mixture is removed as described above.

## Claims

1. A method of producing raw oil (14) from hydrocarbonaceous residues (12) comprising the steps of:
i. comminuting and mixing hydrocarbonaceous residues with an oil (28) having a boiling point of at least 300°C and a catalyst (32) comprising aluminum silicate in a reactor vessel (24) to form a mixture,
a. wherein the comminuting and mixing is configured to provide sufficient friction heat, combined with any exothermal heat generated in the mixture, such that the temperature of the mixture reaches and is maintained at 240°C to 290°C, preferably 260° to 290°, more preferably 260°C to 280°C,
b. wherein the reactor vessel is maintained at a subatmospheric pressure being at least 0.05 bar below atmospheric pressure, and
ii. collecting (40, 42), from the reactor vessel, gaseous CO₂ and gaseous hydrocarbons formed by chemical reactions in the mixture, as well as gaseous H₂O evaporated from the mixture, and
iii. producing the raw oil from the gaseous hydrocarbons.

2. The method according to claim 1, wherein step (iii) comprises the substeps of:
a. condensing the gaseous hydrocarbons and the gaseous H₂O to form a condensed liquid (46) comprising liquid hydrocarbons and liquid H₂O, and,
b. separating the liquid hydrocarbons from the condensed liquid to produce the raw oil.

3. The method according to any preceding claim, wherein step (i) further comprises adding CaCO₃ (20) to the mixture.

4. The method according to any preceding claim, wherein the hydrocarbonaceous residues (12) comprise at least 30 wt% biomass.

5. The method according to any preceding claim, wherein the hydrocarbonaceous residues (12), prior to comminuting and mixing, comprises at the most 5 wt% inorganic matter.

6. The method according to any preceding claim, wherein the hydrocarbonaceous residues (12) have a dry matter content of at least 70%, preferably 80%, more preferably at least 85%.

7. The method according to any preceding claim, further comprising the steps of:
iv. distilling the raw oil (14) to at least produce light hydrocarbons (76) and heavy hydrocarbons (112),
and wherein the method preferably comprises the further steps of:
v. recirculating the heavy hydrocarbons to the reactor vessel (24), and/or
vi. adding at least one additive (82) to the light hydrocarbons.

8. The method according to any preceding claim, further comprising the step of:
vii. removing part of the mixture from the reactor vessel (24),
viii. separating the removed part of the mixture into liquid hydrocarbons (102) and inorganic substances (104) and catalyst (32),
and wherein the method preferably comprises the further steps of:
ix. recirculating the liquid hydrocarbons to the reactor vessel, and/or:
x. separating the inorganic substances and catalyst into minerals, ash and catalyst,
and
xi. recirculating the catalyst to the reactor vessel.

9. The method according to any preceding claim, further comprising the step of:
xii. producing methanol (66) by reacting CO₂ (62) removed from the reactor vessel with hydrogen gas (60) obtained from the H₂O removed from the reactor vessel.

10. A plant (10) for producing raw oil (14) from hydrocarbonaceous residues (12), comprising:
• a reactor vessel (24) for holding a mixture of hydrocarbonaceous residues, oil (28) having a boiling point of at least 300°C, and a catalyst (32) comprising aluminum silicate,
• a comminuting and mixing device (36) for comminuting and mixing the hydrocarbonaceous residues with the oil and the catalyst in the reactor vessel, the comminuting and mixing device being configured to provide sufficient friction heat, combined with any exothermal heat generated in the mixture, such that the temperature of the mixture reaches and is maintained 240°C to 290°C, preferably 260° to 290°, more preferably 260°C to 280°C,
• a pump system (38) configured to maintain the reactor vessel at a subatmospheric pressure being at least 0.05 bar below atmospheric pressure, and for collecting gaseous CO₂ (40) formed by a chemical reaction in the mixture from the reactor,
• a device (114) for collecting, from the reactor vessel, gaseous hydrocarbons formed by a chemical reaction in the mixture, as well as removing gaseous H₂O evaporated from the mixture, and,
• a device (44, 48) for producing raw oil from the gaseous hydrocarbons.

11. The plant (10) according to claim 10, wherein the device (44, 48) for producing raw oil from the gaseous hydrocarbons comprises:
∘ a condenser (44) for condensing the gaseous hydrocarbons and the gaseous H₂O to form a condensed liquid comprising liquid hydrocarbons and liquid H₂O, and,
∘ a separator (48) for separating the liquid hydrocarbons from the condensed liquid to produce the raw oil.

12. The plant (10) according to claim 10, further comprising:
• a distillation column (70) for distilling the raw oil to at least produce light hydrocarbons (76) and heavy hydrocarbons (112),
and wherein the plant preferably further comprises:
• a recirculating loop (112) for recirculating the heavy hydrocarbons to the reactor vessel, and/or,
• a mixer (80) for adding at least one additive (82) to the light hydrocarbons.

13. The plant (10) according to any one of the claims 10-12, further comprising:
• an outlet (90) for removing part of the mixture from the reactor vessel (24),
• a separator (96) for separating the removed part of the mixture into liquid hydrocarbons (102) and inorganic substances (104) and catalyst (32),
and wherein the plant preferably comprises
• a recirculation loop (102) for recirculating the liquid hydrocarbons to the reactor vessel (24)
and/or:
• a separator (110) for separating the inorganic substances and catalyst into minerals, ash and catalyst, and,
• a recirculation loop (32) for recirculating the catalyst to the reactor vessel.

14. The plant (10) according to any one of the claims 10-13, further comprising:
• a further reaction vessel (64) for producing methanol by reacting CO₂ collected from the reactor vessel (24) with hydrogen gas (60) obtained from the H₂O collected from the reactor vessel.

15. Raw oil produced by performing the method according to any one of the claims 1-9, or produced using the plant according to any of the claims 10-14, wherein the raw oil preferably comprises or consists of hydrocarbons having carbon numbers in the range of C6-C26, and/or has a density of 820-850 kg/m³.
